# EUROPEAN PATENT SPECIFICATION

(11) **EP 1 740 795 B1**
(45) Date of publication and mention of the grant of the patent: **03.11.2010**
(21) Application number: 05718111.7
(22) Date of filing: 17.03.2005
(51) Int. Cl.: E21B 33/138

(54) **MULTIZONE STIMULATION USING WAX BALLS**
WACHSKUGELN VERWENDENDE MEHRZONENSTIMULATION
STIMULATION MULTIZONE AU MOYEN DE BALLES DE CIRE

(30) Priority: 18.03.2004 GB 0406123
(43) Date of publication of application: 10.01.2007
(73) Proprietor: Marcantonio, Vincent, Great Yarmouth Norfolk NR30 5SW (GB); Mardantonio, Matthew, Great Yarmouth Norfolk NR30 5SW (GB)
(72) Inventor: Marcantonio, Vincent, Great Yarmouth Norfolk NR30 5SW (GB); Mardantonio, Matthew, Great Yarmouth Norfolk NR30 5SW (GB)
(74) Representative: ip21 Ltd
(86) International application number: PCT/GB2005/001131
(87) International publication number: WO 2005/090745

(56) References cited:
- FR-A- 2 122 311
- US-A- 2 728 395
- US-A- 3 480 079
- US-B1- 6 380 138
- JORDAN ET AL: "Wax-diverter technology for squeeze treatments" SPE PROD. & FACILITIES, vol. 14, no. 4, 28 September 1999 (1999-09-28), - 30 September 1999 (1999-09-30) pages 246-252, NEW ORLEANS

## Description

### Field of the Invention

The invention relates to improvements in multizone stimulation processes used in the oil and gas industry.

### Review of the Art

During the production of oil (or gas) a process known as multizone stimulation is often used. This process involves drilling an elongate shaft also known as a well which is then sealed at one end. A down-hole tool, known as a perforating gun, is used to generate perforations in the side walls of the shaft, at a pre-set point. Chemicals are then pumped into the surrounding rock to break down the structure of the rock strata, such that oil can subsequently be more efficiently removed from the surrounding strata (or area).

Sealants such as polypropylene balls or small flat wax frits - known in the industry as 'diverters' or 'Frac Balls' - are then passed into the chemicals being used, under pressure such that they pass into the perforations and so seal off the well shaft from the surrounding area. A prior art ball sealer is described in document US 6,380,138 B. The perforation process is then repeated at further points within the shaft, chemicals introduced as required and the other points sealed off in the same way if required. When oil production is started/resumed from the area, if polypropylene spheres have been used then they are forced out of their sealing positions (by the release of the retaining pressure) and carried with the flow of the oil to a point where known means are present to enable their removal. If wax frits are used then, due to the increased ambient temperature at the normal depth at which oil wells are located, the frits are released from their sealing position (by the release of the retaining pressure) such that they are melted by the hot oil and so do not require removal from the resulting flowing oil.

Another process carried out in the oil/gas industry uses the same chemicals to unblock strata, via previously made perforations, which have become blocked during oil production. Polypropylene balls or wax frits (sealants) are also used in this case but they result in the blockage of the perforations into which the chemicals initially flow such that the subsequent flow of chemicals is directed to other perforations and hence other blocked strata areas. In this way a number of previously blocked areas of strata can be treated before the pressure is released which is keeping the sealants in place, resulting in a resumption of the flow of oil from the area.

However, due to the small size of the frits used in these processes and their non-uniform shape, they are not readily transported to the area which is required to be sealed off and the process requires a build up of the frits in the perforations (some frits pass through the perforation) thus resulting in the need to use large quantities of the frits to seal off the perforations.

There are also problems associated with the transfer of the frits down the apparatus used to deliver them to the relevant area. Due to their irregular shape they tend to block the transfer lines used in the transfer process.

There therefore exists a requirement for a material which can be used in the aforementioned sealing processes which has the shape and resulting flow characteristics of the polypropylene spheres currently used in combination with the beneficial melting properties associated with the use of wax frits. The current invention seeks to provide a solution which addresses these issues.

### Summary of the Invention

In a first aspect, the invention provides a diverter for use in multizone stimulation processes according to claim 5.

A method of producing a diverter suitable for use in multizone stimulation processes is described, the method being characterised by the features,
a) that the process used to produce the diverters is an injection moulding process;
b) that the material used in the process is wax with or without any necessary diluent, of a melting point and specific gravity appropriate to the intended use; and
c) that the mould cavities defining the shape of the moulded products are ball-shaped.

In another aspect the invention provides a multizone stimulation process according to claim 1.

### Brief Description of the Drawings

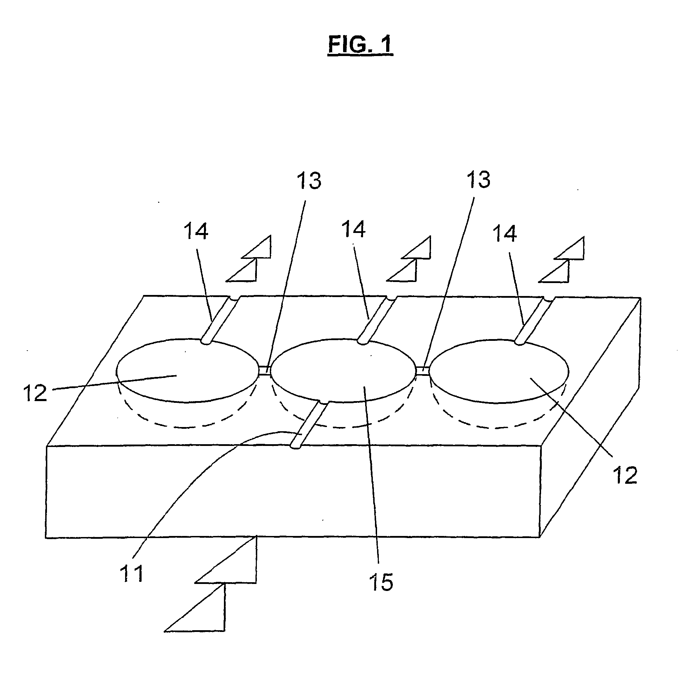

Figure 1 is a perspective view of one of the stainless steel block halves that makes up a two-part mould suitable for forming wax spheres.

### Description of the Preferred Embodiment

In this embodiment, wax spheres are produced by injecting into a two-part mould a wax with an appropriate melting point. The spheres described herein are 5/8 of an inch (16mm) or 7/8 of an inch (22mm) in diameter and this particular embodiment uses paraffin wax with a melting point of 68°C (155°F).

It will be appreciated by those skilled in the art that other waxes with appropriate melting points could also be used such as vegetable waxes and other manufactured and naturally occurring waxes with appropriate melting points. Paraffin wax typically comprises solid saturated hydrocarbons with the molecular formula CₙH₂ₙ₊₂. Wax is used in the current application as it is inert with respect to the acidic chemicals used in the multizone stimulation process described herein and additionally is soluble in crude oil which is at a temperature above the melting point of the wax.

The mould half of Figure 1, and its mirror-image complementary half (not illustrated) mould to be used in the process described herein is treated with an appropriate agent to promote release of wax spheres produced, preferably before the two-part mould used herein is assembled.

The mould, when assembled, defines one or more (in practice, many) rows of hollow spheres formed within two blocks of stainless steel. Channels (13) are provided within the blocks such that each hollow sphere 12 is connected to its immediately adjacent neighbouring spheres.

Molten wax is forced into the mould under pressure via a single inlet (11) leading into a sphere (15) defined in a central portion of the mould. The wax is then forced by applied pressure along the channels (13) to adjacent hollow spheres. In this way the hollow spheres fill with wax, from the side to which the inlet is connected, to the opposite side which incorporates a series of channels forming outlets (14) through which air contained in the mould is forced out as the molten wax fills the mould. It is important that there are no air pockets in the formed wax spheres.

The wax is then allowed to cool and the wax spheres then contained within the mould are released by separating the two blocks that form the mould.

These wax spheres when used in the process of multizone stimulation are required to have a specific gravity similar to or the same as the chemicals used to break down the rock structure. The reason for this is that as the spheres used must be transported with the chemicals being used, if they have a lower specific gravity they will float in the chemical (gel/liquid), if they have a higher specific gravity they will sink in the chemical gel/liquid. In either of these cases a problem will be generated in that the spheres are not readily transported to the required areas. The result of this is that larger quantities of wax spheres must be used to seal off the broken down rock structure before starting the multizone stimulation at other points.

By making the density of the spheres the same as or similar to the chemical fluids being used the spheres are readily transported by the chemicals being used. The specific gravity of the fluids normally used is 0.9, 1.1, 1.2 or 1.3 relative to water at 25°C. Spheres of the appropriate specific gravity are produced by first mixing the wax used with appropriate quantities of diluents such as calcium carbonate and/or talcum powder which are used in a powdered form. The appropriate ratio of diluent to wax can be determined.

The reason for using these particular diluents is that they are inert with respect to the paraffin wax used herein. Various other materials could be used as diluents such as other aluminosilicates, potassium carbonate, calcium chloride and the like.

The current process uses a vertically mounted mould which is filled from top to bottom via the inlet (11).

In use, the size of the spheres used is determined by the diameter of the perforations created by the perforating gun in the well wall. A suitable quantity of wax spheres (typically 150 - 200) is injected into the flow of the chemicals being used (treatment fluid) by means of a transfer/injection gun.

The wax spheres are transported into the perforations in the wall of the well using the chemicals being used to break down the rock strata, the temperature in the well and immediate area having been reduced below the melting point of the wax being used by the flow of the stimulation chemicals used. The wax spheres are forced into the perforations in the wall of the well under pressure and form a seal such that the multizone stimulation process can be repeated elsewhere - or alternatively, other processes can be carried out. Positive pressure is applied to keep the spheres in place until the multizone stimulation process or other processes are complete. Release of the applied pressure results in the flow of oil/gas up the drilled shaft. The temperature within the shafts rises as a result of this to a point in excess of the melting point of the wax. The molten wax then dissolves in the oil such that there is not the previous need to manually recover the known propylene spheres from the flow of oil/gas.

The paraffin waxes used in the embodiment described herein can be obtained from the following suppliers:
Paraffin waxes with melting points of 68°C (155°F), 82°C (180°F), can be obtained from the following suppliers;
AUBIN Chemical Solutions, Aberdeen (GB);
RAW Chemical Distribution Limited, Great Yarmouth (GB); and
EGGAR & Co (Chemicals) Limited, Reading (GB) who are the distributors for Eastman Chemical Company in the USA.

Paraffin waxes with a melting point of 104°C (220°F) are available from RAW Chemicals (GB) and EGGAR & Co (Chemicals) Limited (GB).

## Claims

1. A multizone stimulation process in a well wall of rock strata with diametric perforations comprising the steps of:
• chemically treating an area to improve the flow of oil or gas through rock strata;
• scalping the chemically treated area by insertion under pressure of diverters into perforations in the wall of a well; and
• subsequently releasing the diverters to allow oil to flow;
wherein the process uses diverters having a melting point sufficiently high to avoid melting when being transported to said perforations and sufficiently low so that, when exceeded, the ball melts into said transportation liquid;
**characterised in that** the process further comprises the steps of:
• injecting said diverters into said transportation liquid by employing an injection gun;
• employing diverters in the form of spherical balls; which are a mixture of paraffin wax and a diluent in a powdered form which is inert with respect to said wax;
• selecting the quantity of diluent such that the ball's specific gravity is at least similar to the specific gravity of the transportation liquid in order to avoid flouting or sinking in the liquid when transported to said perforations; and
• predetermining the mixture of wax and diluent and the size of the balls relative to the diameter of perforations such that the balls can be forced into perforations in the wall of the well under pressure and form a seal; and on release of the sealing pressure, the balls melt as they are carried upwards in the oil flow.

2. A process according to claim 1, wherein said diluent is selected from the group comprising: calcium carbonate; talcum powder; aluminosilicates; potassium carbonate; and calcium chloride.

3. A process according to claim 2, wherein said diverters is formed from a mixture of paraffin wax; and calcium carbonate and/or talcum powder.

4. A process according to claim 1, wherein the diameter of the diverter is selected from the range of 16mm to 22mm.

5. A diverter for use in a multizone stimulation process according to any of the preceding claims, said diverter incorporating wax; said diverter having a melting point sufficiently high to avoid melting when being transported to said perforation and sufficiently low so that, when exceeded, the diverter melts into said transportation liquid;
**characterised in that**:
a) the diverter is in the form of a spherical ball;
b) said spherical ball is wax-based and are of a mixture of paraffin wax and a diluent in a powdered form which is inert with respect to said wax;
c) the quantity of diluent is such that the ball's specific gravity is at least similar to the specific gravity of the chemical fluid used for the transportation of the ball in order to avoid floating or sinking in the liquid; and
d) the mixture of wax and diluent; and the size of the ball is predetermined relative to the diameter of perforations in a well wall of rock strata such that the ball is forceable into a perforation in the wall of the well under pressure and forms a seal.

6. A diverter as claimed in claim 5, wherein the diluent is selected from the group comprising: calcium carbonate; talcum powder; aluminosilicates; potassium carbonate; and calcium chloride.

7. A diverter according to claim 5 or claim 6, wherein the wax-based ball is formed from a mixture of paraffin wax; and calcium carbonate and/or talcum powder.

8. A diverter according to claim 5, wherein the diameter of the sphere is in the range of 16mm to 22mm.

## Patentansprüche

1. Ein Multizonenstimulationsprozess in einer Bohrlochwand aus Gesteinsschichten mit diametralen Perforationen, umfassend die folgenden Schritte:
• das chemische Behandeln eines Bereichs, um den Fluss von Öl oder Gas durch Gesteinsschichten zu verbessern;
• das Verschließen des chemisch behandelten Bereichs durch Einführen von Divertern unter Druck in Perforationen in der Wand eines Bohrlochs; und
• das nachfolgende Auslösen der Diverter, um den Fluss von Öl zu ermöglichen; wobei in dem Prozess Diverter mit einem Schmelzpunkt verwendet werden, der ausreichend hoch ist, um das Schmelzen während des Transports zu den Perforationen zu vermeiden, und der ausreichend niedrig ist, um beim Übersteigen die Kugel in die Transportflüssigkeit einzuschmelzen;
**dadurch gekennzeichnet, dass** der Prozess ferner die folgenden Schritte umfasst:
• das Injizieren der Diverter in die Transportflüssigkeit durch Verwendung einer Injizierspritze;
• das Verwenden von Divertern in Form von sphärischen Kugeln; welche eine Mischung aus Paraffinwachs und einem Verdünnungsmittel in Pulverform sind, das im Hinblick auf das Wachs inert ist;
• das Auswählen der Menge des Verdünnungsmittels, so dass das spezifische Gewicht der Kugel mindestens gleich dem spezifischen Gewicht der Transportflüssigkeit ist, um ein Schwimmen auf der Flüssigkeit oder ein Einsinken in die Flüssigkeit zu vermeiden, wenn der Transport zu den Perforationen erfolgt; und
• das Vorgeben der Mischung aus Wachs und Verdünnungsmittel sowie der Größe der Kugeln im Verhältnis zum Durchmesser der Perforationen, so dass die Kugeln unter Druck in die Perforationen in der Wand des Bohrlochs gepresst werden können und einen Verschluss bilden; und dass beim Lösen des Verschlussdrucks die Kugeln schmelzen, während sie im Ölstrom nach oben transportiert werden.

2. Prozess gemäß Anspruch 1, wobei das Verdünnungsmittel aus der Gruppe ausgewählt wird, welche umfasst: Calciumcarbonat; Talkumpuder; Alumosilicate; Kaliumcarbonat und Calciumchlorid.

3. Prozess gemäß Anspruch 2, wobei die Diverter aus einer Mischung aus Paraffinwachs und Calciumcarbonat und/oder Talkumpuder gebildet werden.

4. Prozess gemäß Anspruch 1, wobei der Durchmesser des Diverters aus dem Bereich zwischen 16 mm und 22 mm ausgewählt wird.

5. Diverter zur Verwendung in einem Multizonenstimulationsprozess gemäß einem der vorherigen Ansprüche, wobei der Diverter Wachs enthält; wobei der Diverter einen Schmelzpunkt hat, der ausreichend hoch ist, um das Schmelzen während des Transports zu der Perforation zu vermeiden, und der ausreichend niedrig ist, um beim Übersteigen den Diverter in die Transportflüssigkeit einzuschmelzen;
**dadurch gekennzeichnet, dass:**
a) der Diverter die Form einer sphärischen Kugel hat;
b) die sphärische Kugel auf Wachs basiert und aus einer Mischung aus Paraffinwachs und einem Verdünnungsmittel in Pulverform besteht, das im Hinblick auf das Wachs inert ist;
c) die Menge des Verdünnungsmittels so gewählt wird, dass das spezifische Gewicht der Kugel mindestens gleich dem spezifischen Gewicht der chemischen Flüssigkeit ist, die zum Transportieren der Kugel verwendet wird, um ein Schwimmen auf der Flüssigkeit oder ein Einsinken in die Flüssigkeit zu vermeiden; und
d) die Mischung aus Wachs und Verdünnungsmittel sowie die Größe der Kugel im Verhältnis zum Durchmesser von Perforationen in einer Bohrlochwand aus Gesteinsschichten so vorgegeben wird, dass die Kugel unter Druck in eine Perforation in der Wand des Bohrlochs gepresst werden kann und einen Verschluss bildet.

6. Diverter gemäß Anspruch 5, wobei das Verdünnungsmittel aus der Gruppe ausgewählt wird, welche umfasst: Calciumcarbonat; Talkumpuder; Alumosilicate; Kaliumcarbonat und Calciumchlorid.

7. Diverter gemäß Anspruch 5 oder Anspruch 6, wobei die auf Wachs basierende Kugel aus einer Mischung aus Paraffinwachs und Calciumcarbonat und/oder Talkumpuder gebildet wird.

8. Diverter gemäß Anspruch 5, wobei der Durchmesser der Kugel im Bereich zwischen 16 mm und 22 mm liegt.

## Revendications

1. Un processus de stimulation multizone dans une paroi de puits de strates rocheuses avec des perforations diamétrales comportant les étapes visant à :
• traiter chimiquement une aire pour améliorer l'écoulement de pétrole ou de gaz à travers les strates rocheuses ;
• fermer de façon étanche l'aire traitée chimiquement par insertion sous pression de déflecteurs dans des perforations dans la paroi d'un puits ; et
• relâcher ensuite les déflecteurs pour permettre au pétrole de s'écouler ;
où le procédé utilise des déflecteurs ayant un point de fusion suffisamment élevé pour éviter de fondre quand ils sont transportés auxdites perforations et suffisamment bas de sorte que, lorsque dépassé, la boule fonde dans ledit liquide de transport ;
**caractérisé en ce que** le procédé comporte de plus les étapes visant à :
• injecter lesdits déflecteurs dans ledit liquide de transport en employant un perforateur à injection ;
• employer des déflecteurs sous la forme de boules sphériques ; qui sont un mélange de cire de paraffine et de diluant sous forme de poudre qui est inerte par rapport à ladite cire ;
• sélectionner la quantité de diluant de telle sorte que la densité de la boule soit au moins similaire à la densité du liquide de transport afin d'éviter de flotter ou de couler dans le liquide lorsque transportée auxdites perforations ; et
• prédéterminer le mélange de cire et de diluant et la taille des boules relativement au diamètre des perforations de telle sorte qu'il soit possible de pousser les boules de force dans les perforations dans la paroi du puits sous pression et de former une fermeture étanche ; et au relâchement de la pression d'étanchéité, les boules fondent à mesure qu'elles sont transportées vers le haut dans le flux de pétrole.

2. Un procédé selon la revendication 1, où ledit diluant est sélectionné dans le groupe comportant : carbonate de calcium ; poudre de talc ; aluminosilicates ; carbonate de potassium ; et chlorure de calcium.

3. Un procédé selon la revendication 2, où lesdits déflecteurs sont formés d'un mélange de cire de paraffine ; et de carbonate de calcium et/ou de poudre de talc.

4. Un procédé selon la revendication 1, où le diamètre du déflecteur est sélectionné dans la gamme allant de 16 mm à 22 mm.

5. Un déflecteur pour une utilisation dans un procédé de stimulation multizone selon n'importe lesquelles des revendications précédentes, ledit déflecteur incorporant de la cire ; ledit déflecteur ayant un point de fusion suffisamment élevé pour éviter de fondre quand il est transporté à ladite perforation et suffisamment bas de sorte que, lorsque dépassé, le déflecteur fonde dans ledit liquide de transport ;
**caractérisé en ce que :**
a) le déflecteur est sous la forme d'une boule sphérique ;
b) ladite boule sphérique est à base de cire et est un mélange de cire de paraffine et de diluant sous forme de poudre qui est inerte par rapport à ladite cire ;
c) la quantité de diluant est telle que la densité de la boule est au moins similaire à la densité du fluide chimique utilisé pour le transport de la boule afin d'éviter de flotter ou de couler dans le liquide ; et
d) le mélange de cire et de diluant ; et la taille de la boule est prédéterminée relativement au diamètre des perforations dans une paroi de puits de strates rocheuses de telle sorte que la boule puisse être poussée de force dans une perforation dans la paroi du puits sous pression et former une fermeture étanche.

6. Un déflecteur tel que revendiqué dans la revendication 5, où le diluant est sélectionné dans le groupe comportant : carbonate de calcium ; poudre de talc ; aluminosilicates ; carbonate de potassium ; et chlorure de calcium.

7. Un déflecteur selon la revendication 5 ou la revendication 6, où ladite boule à base de cire est formée d'un mélange de cire de paraffine ; et de carbonate de calcium et/ou de poudre de talc.

8. Un déflecteur selon la revendication 5, où le diamètre de la sphère est dans la gamme allant de 16 mm à 22 mm.
